Europäisches Patentamt

European Patent Office

Office européen des brevets

(11) Publication number: **0 222 546**
**B1**

(12) **EUROPEAN PATENT SPECIFICATION**

(45) Date of publication of the patent specification:
**20.12.89**

(21) Application number: **86308347.3**

(22) Date of filing: **27.10.86**

(51) Int. Cl.⁴: **F 02 B 41/10, F 02 B 37/00**

(54) Engine exhaust gas energy recovery apparatus.

(30) Priority: **29.10.85 JP 241871/85**

(43) Date of publication of application:
**20.05.87 Bulletin 87/21**

(45) Publication of the grant of the patent:
**20.12.89 Bulletin 89/51**

(84) Designated Contracting States:
**DE FR GB**

(56) References cited:
**EP-A- 0 159 146
DE-B- 1 040 839
DE-C- 197 483
DE-C- 663 976**

(73) Proprietor: **Isuzu Motors Limited, 6-22-10 Minamiooi
Shinagawa-ku, Tokyo 140 (JP)**

(72) Inventor: **Kawamura, Hideo, 3129-13, Okada
Samukawa-machi, Kouza-gun Kanagawa (JP)**

(74) Representative: **Brunner, Michael John et al, GILL
JENNINGS & EVERY 53-64 Chancery Lane, London
WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to apparatus for recovering energy contained in the exhaust gas of an engine and, more particularly, to energy recovery apparatus for operating, at high efficiency, an exhaust turbine coupled to a generator, thereby improving the exhaust energy recovery efficiency.

Engines having an adiabatic structure which is resistant to heat transfer have recently come into use. These engines employ an adiabatic material, such as a ceramic, for constructing such engine components as the combustion chambers and hexaust pipe. With engines of this type, it is unnecessary to cool the engine by dissipating the internally-generated heat. Energy possessed by the high-temperature exhaust gas produced by the engine is recovered and fed back to the engine output shaft, axles and the like to enhance engine output.

One known method of recovering exhaust energy is to use the rotational force of a turbine which is rotated by the exhaust gas, by means of a multiple-stage gear mechanism, to drive the engine crankshaft.

Another proposal is to effect a series connection between an exhaust turbine driving a generator and a turbine having an air intake compressor and to supply the output of the generator to an electric motor provided on the engine output shaft, thereby enabling the exhaust energy to be recovered. In another proposal an exhaust bypass circuit is provided, a series connection is made between the exhaust turbine coupled to the generator and the exhaust turbine coupled to the intake compressor, the output of the generator is fed to a motor provided on the engine output shaft, the compressor is driven, and the amount of exhaust that passes through the exhaust gas bypass circuit is controlled, thereby running the engine in an optimum state. These proposals have been disclosed in Japanese Laid-Open Patent Application (Kokai) No. 59-141712, which is directed towards an engine equipped with an exhaust energy recovery apparatus.

Methods of driving the crankshaft which rely on a gear mechanism involve certain problems. Specifically, the transfer efficiency of each stage of the gear mechanism ordinarily is 0.9 to 0.95, so that there is a decline in efficiency to about 80% with a three-stage gear mechanism. Furthermore, the rotational speed of the exhaust turbine is as high as 10,000 rpm. Reducing this speed requires a gear mechanism having a greater number of stages, thus resulting in a much lower transfer efficiency and a larger amount of frictional loss. Moreover, since the rotational speed of the exhaust turbine is made to accomodate the rotational speed of the engine, optimum engine turbine performance cannot be achieved.

With the proposals described in EP-A-0 159 146 and in the above-mentioned Japanese Patent Application No. 59-141 712, the engine is run in the optimum state by controlling the amount of exhaust gas flow through the exhaust bypass circuit on the basis of data received from an engine velocity sensor and an engine load sensor. However, no control is performed to optimise the rotational speed of the exhaust turbine or the efficiency of the turbine.

An object of the present invention is to provide an improved energy recovery apparatus in an engine having an adiabatic structure.

According to the present invention there is provided apparatus for recovering energy from exhaust gas emitted by an engine, characterised by an exhaust turbine in an exhaust outlet path of the engine; a generator coupled to the exhaust turbine to be driven thereby; first and second temperature sensors for sensing exhaust gas temperature at an inlet and an outlet, respectively, of the exhaust turbine; a speed sensor for sensing the rotational speed of the exhaust turbine; and means for controlling loading of the generator in response to a signal from each of the sensors, to optimise the operation of the exhaust turbine.

An embodiment of the invention will now be described, by way of example, with reference to the accompanying drawings, in which:

Fig. 1 is a schematic block diagram illustrating the embodiment;

Fig. 2 is an explanatory view showing a cross section of an exhaust turbine;

Fig. 3 is a graph illustrating an example of turbine efficiency; and

Fig. 4 is a flowchart illustrating an example of engine operation according to the described embodiment.

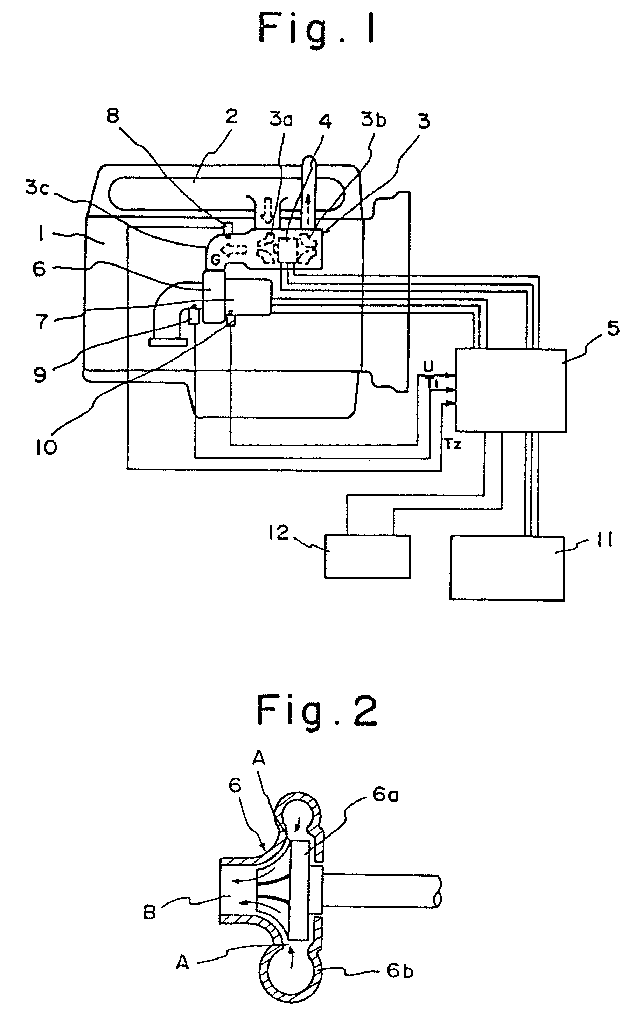

Referring to Fig. 1 of the drawings, an engine 1 having an adiabatic structure employs a ceramic as the material constituting such components as the cylinder liners, cylinder head insulator plates, exhaust valves, pistons, etc. The engine 1 has an exhaust manifold 2 the outer wall of which is composed of a ceramic. Connected to the exhaust manifold 2 is a turbocharger 3 having a turbine rotor 3a driven by exhaust gas emitted from the exhaust manifold 2, a compressor rotor 3b coupled directly to the rotary shaft of the turbine rotor 3a, and a motor/generator 4 having a rotor coupled directly to the turbine blade rotary shaft. The motor/generator 4 has a permanent-magnet rotor and a wound stator. When the turbine rotor 3a is driven at high speed by the energy of the exhaust gas, the compressor 3b compresses intake air which supercharges the engine 1. At the same time, an alternating current is induced in the windings of the stator and is delivered to a control unit 5 connected thereto.

The turbocharger 3 has a discharge port 3c to which an exhaust turbine 6 is connected. The exhaust turbine 6 is driven by driving the turbine rotor 3a and, further, by exhaust gas G having residual energy. The exhaust turbine 6 has a rotary shaft directly connected to the rotary shaft of a generator 7 attached thereto, whereby energy in the exhaust gas G is recovered by being converted into electrical energy.

A first temperature sensor 8 is mounted in the discharge port 3c of the turbocharger 3 for sensing the temperature of the exhaust gas G that flows into the exhaust turbine 6. The sensor 8 provides the control unit 5 with a signal Tz indicative of the temperature sensed. A second temperature sensor 9 is mounted in the outlet of the exhaust turbine 6 and provides the control unit 5 with a signal T1 indicative of the temperature at the exhaust turbine outlet. A speed sensor 10 is mounted on the exhaust turbine 6 for sensing the rotational speed of the shaft of the turbine 6. The speed sensor 10 produces a signal U indicative of the sensed speed and delivers the signal to the control unit 5.

An AC motor 11 is supplied with the outputs of the motor/generator 4 and the generator 7, via the control unit 5, when the generators operate. By way of example, the exhaust energy can be recovered by coupling the output shaft of the engine 1 and the rotary shaft of the AC motor 11 to assist the driving force of the engine 1.

A battery 12 supplies the control unit 5 with direct current. The control unit converts this direct current into AC power of a predetermined frequency and delivers the AC power to the motor/generator 4, thereby driving the compressor rotor 3b so that supercharging of the intake air may take place when the engine 1 is rotating at low speed under a high load.

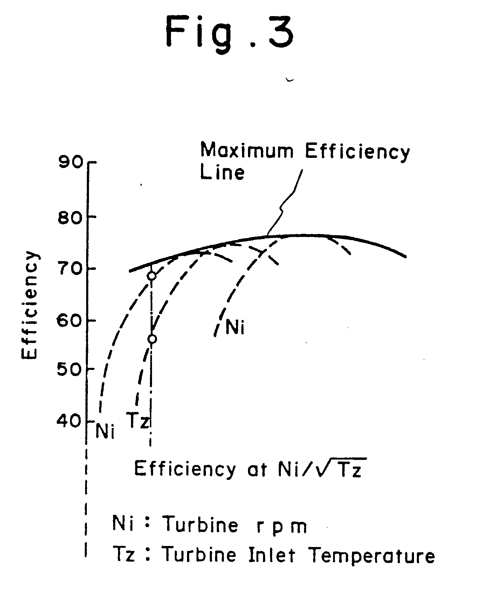

Fig. 2 is an explanatory view illustrating a cross-section of an exhaust turbine, and Fig. 3 is a graph showing an example of variation of turbine efficiency. In Fig. 2, a turbine rotor 6a is driven by the energy of exhaust gas which reaches an outelt B after being ejected from a nozzle A between the turbine rotor 6a and a scroll 6b. It is known that maximum efficiency is obtained when the ratio of turbine speed U1 to an adiabatic expansion rate Cad attained due to adiabatic expansion at the nozzle A is expressed as follows:

$$U1/Cad = 0.7 \tag{1}$$

As shown in the graph of Fig. 3, efficiency at a rotational speed of N2 is about 55%. However, when the load on the generator 7 increases and the rotational speed of the exhaust turbine falls to N1, an efficiency of about 70% is obtained.

The control unit of Fig. 2 is constituted by a microcomputer comprising a processor, a memory section including such memories as a ROM and a RAM, and an input/output section. When the inflow temperature signal Tz, the outlet temperature signal T1 and the speed signal U arrive, the control unit 5 executes data processing based on prescribed data and a predetermined arithmetic expression stored previously in the ROM, thereby issuing predetermined commands to effect control. The architecture for accomplishing this is well-known and need not be described in detail here.

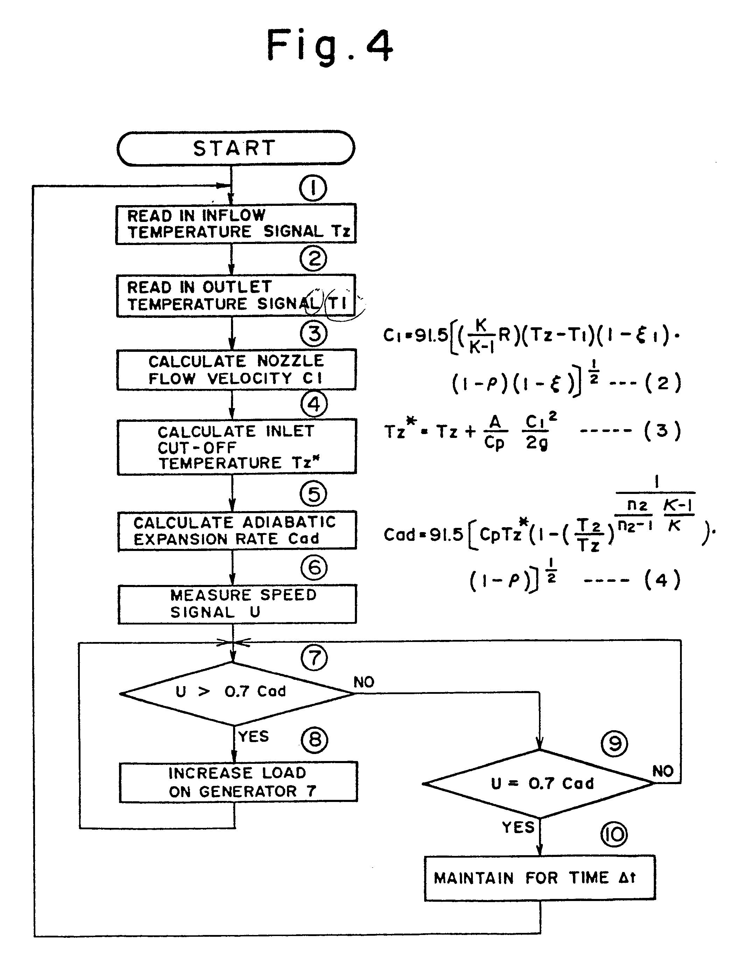

Fig. 4 is a processing flowchart illustrating an example of processing in accordance with the present invention.

Steps 1 and 2 of the flowchart call for the inflow temperature signal Tz and the outlet temperature signal T1 to be read in the memory section of control unit 5 from the first temperature sensor 8 and second temperature sensor 9, respectively, provided on the exhaust turbine 6. In step 3, the control unit 5 calculates the value of a nozzle flow velocity C1 in in accordance with the following equation:

$$C1 = 91.5 \left[ \left( \frac{K}{K-1} R \right) (Tz - T1)(1 - \xi_1) \times (1 - \rho)(1 - \xi_1) \right]^{1/2} \tag{2}$$

e $K/(K-1)$ is a constant, e.g. a value of 0.251; $\xi_1$ represents a coefficient for loss at the nozzle, e.g. a value of 0.08; $\rho$ denotes the degree of reaction, e.g. a value of 0.4 to 0.5; and R stands for a gas constant.

Next, step 4 calls for the control unit 5 to obtain $Tz^*$ by performing a turbine inlet cut-off temperature calculation in accordance with the following equation:

$$Tz^* = Tz + \frac{A}{Cp} \frac{C1^2}{2g} \tag{3}$$

where Cp represents mean constant pressure specific heat, e.g. a value of 0.272, and $A \cdot C1^2/2g$ stands for the kinetic energy at the nozzle outlet.

Next, at step 5, control unit 5 calculates the adiabatic expansion rate Cad in accordance with the following equation using the value of $Tz^*$ found from Eq. (3):

$$Cad = 91.5 \left[ Cp\, Tz^* \left( 1 - \left( \frac{T2}{Tz} \right)^{\frac{1}{\frac{n_2}{n_2-1} \cdot \frac{K-1}{K}}} \right) \cdot (1 - \rho) \right]^{\frac{1}{2}} \tag{4}$$

This is followed by step 6, at which the control unit 5 measures the speed signal U from the speed sensor 10 provided on the exhaust turbine 6; step 7, at which the value of the speed signal U is compared with the value of Cad calculated at step 5; and step 8, at which the load on the generator 7 is increased to reduce the rotational speed of the exhaust turbine 6 if it is determined at the step 7 that the speed signal U is greater than 0.7 Cad. From step 8 the program returns to step 7.

If it is determined at step 7 that U is not greater than 0.7 Cad, then the program proceeds to a step 9, at which it is determined whether U is equal to 0.7 Cad. If the answer is YES, then this state is maintained for a predetermined period of time $\Delta t$ at step 10, after which the program returns to step 1. If U is found to be less than 0.7 Cad (i.e., NO at step 9), then the program returns to the step 7. U is then remeasured and compared with 0.7 Cad.

Thus, the nozzle flow velocity and turbine cut-off temperature are calculated based on the signals indicative of the inlet and outlet temperature of the

exhaust turbine 6, the adiabatic expansion rate is calculated, and the exhaust turbine is operated by controlling the load on the generator 7 in such a manner that the turbine speed takes on a value corresponding to 0.7 Cad.

## Claims

1. Apparatus for recovering energy from exhaust gas emitted by an engine (1), having an exhaust turbine (6) in an exhaust outlet path (3c) of the engine; a generator (7) coupled to the exhaust turbine to be driven thereby; and a control unit (5) for controlling operation of the generator; characterised by first and second temperature sensors (8, 9) for sensing exhaust gas temperature at an inlet and an outlet, respectively, of the exhaust turbine; a speed sensor (10) for sensing the rotational speed of the exhaust turbine; and the control unit (5) having means for controlling loading of the generator in response to a signal from each of the sensors, to optimise the operation of the exhaust turbine.

2. Apparatus according to claim 1, characterised in that the means for controlling loading of the turbine includes: first computing means for computing exhaust turbine efficiency based on signals from the first and second temperature sensors and the speed sensor; and second computing means for adjusting loading of the generator so as to maximize the exhaust turbine efficiency computed by the first computing means.

3. Apparatus according to claim 1 or claim 2, characterised in that optimum efficiency of the exhaust turbine (6) is computed in accordance with the equation

$$U1/Cad = 0.7$$

where U1 represents turbine speed and Cad represents an adiabatic expansion rate.

4. Apparatus according to any preceding claim, wherein the loading of the generator (7) is effected by a battery (12).

5. Apparatus according to any preceding claim, characterised in that plural energy recovery apparatus (3, 4; 6, 7) including the exhaust turbine (6) and the generator (7) rotated thereby are serially connected with respect to an exhaust port of the engine (1).

## Patentansprüche

1. Einrichtung zur Rückgewinnung von Energie aus von einem Motor (1) abgegebenem Abgas, mit einer Abgasturbine (6) in einem Abgasauslaßweg (3c), einem mit der Abgasturbine verbundenen Generator (7), der durch diese angetrieben wird, und mit einem Steuergerät (5) zur Steuerung des Generatorbetriebes, gekennzeichnet durch erste und zweite Temperatursensoren (8, 9) zur Messung jeweils der Abgastemperatur an dem Einlaß und an dem Auslaß der Abgasturbine, einen Geschwindigkeitsmesser (10) zur Messung der Drehgeschwindigkeit der Abgasturbine und dadurch, daß das Steuergerät (5) Mittel zur Steuerung der Generatorlast in Abhängigkeit von einem Signal von jedem Sensor aufweist, um den Betrieb der Abgasturbine zu optimieren.

2. Einrichtung nach Anspruch 1, dadurch gekennzeichnet, daß die Mittel zur Steuerung der Turbinenlast erste Computermittel zur Berechnung des Abgasturbinenwirkungsgrades basierend auf den Signalen von den ersten und zweiten Temperatursensoren und dem Geschwindigkeitsmesser sowie zweite Computermittel zur Regelung der Generatorlast enthält, um den Abgasturbinenwirkungsgrad zu maximieren, der durch die ersten Computermittel berechnet wird.

3. Einrichtung nach Anspruch 1 oder 2, dadurch gekennzeichnet, daß der optimale Wirkungsgrad der Abgasturbine (6) nach der Gleichung

$$U1/Cad = 0,7$$

berechnet wird, in der U1 die Turbinengeschwindigkeit und Cad eine adiabate Expansionsrate ist.

4. Einrichtung nach einem der vorhergehenden Ansprüche, bei der die Belastung des Generators (7) durch eine Batterie (12) bewirkt wird.

5. Einrichtung nach einem der vorhergehenden Ansprüche, dadurch gekennzeichnet, daß eine Mehrzahl von energierückgewinnenden Einrichtungen (3, 4; 6, 7) einschließlich der Abgasturbine (6) und des Generators (7), der durch diese in Drehung versetzt wird, in Serie hintereinander bezüglich eines Auspuffkanals des Motors (1) miteinander verbunden ist.

## Revendications

1. Dispositif pour récupérer l'énergie de gaz d'échappement émis par un moteur (1), comportant une turbine d'échappement (6) sur un trajet (3c) de sortie d'échappement du moteur; un générateur (7) couplé à la turbine d'échappement pour être entraîné par celle-ci; et une unité de commande (5) pour commander le fonctionnement du générateur; caractérisé par un premier et un deuxième capteur de température (8, 9) pour lire la température des gaz d'échappement, respectivement à une entrée et à une sortie de la turbine d'échappement; un capteur de vitesse (10) pour lire la vitesse de rotation de la turbine d'échappement; et des moyens appartenant à l'unité de commande (5), pour commander la charge du générateur en réponse à un signal provenant de chacun des capteurs, afin d'optimiser le fonctionnement de la turbine d'échappement.

2. Dispositif selon revendication 1, caractérisé en ce que les moyens pour commander la charge de la turbine comprennent: des premiers moyens de calcul pour calculer le rendement de la turbine d'échappement en se basant sur des signaux provenant du premier et du deuxième capteur de température et du capteur de vitesse; et des deuxièmes moyens de calcul pour ajuster la charge du générateur de manière à maximiser le rendement de la turbine d'échappement calculé par les premiers moyens de calcul.

3. Dispositif selon revendication 1 ou revendication 2, caractérisé en ce que la rendement optimal de la turbine d'échappement (6) est calculé conformément à l'équation

$$U1/Cad = 0.7$$

dans laquelle U1 représente la vitesse de la turbine et Cad représente une vitesse de détente adiabatique.

4. Dispositif selon l'une quelconque des revendications précédentes, dans lequel la charge du générateur (7) est réalisée au moyen d'une batterie (12).

5. Dispositif selon l'une quelconque des revendications précédentes, caractérisé en ce que plusieurs dispositifs de récupération d'énergie (3, 4); 6, 7), incluant la turbine d'échappement (6) et le générateur (7) entrainé par elle, sont connectés en série par rapport à un passage de sortie du moteur (1).

# Fig. 1

# Fig. 2

# Fig.3

Maximum Efficiency Line

Efficiency

90
80
70
60
50
40

Ni

Ni

Tz

Efficiency at Ni/$\sqrt{Tz}$

Ni : Turbine rpm
Tz : Turbine Inlet Temperature

# Fig. 4

START

① READ IN INFLOW TEMPERATURE SIGNAL Tz

② READ IN OUTLET TEMPERATURE SIGNAL TI

③ CALCULATE NOZZLE FLOW VELOCITY CI

④ CALCULATE INLET CUT-OFF TEMPERATURE Tz*

⑤ CALCULATE ADIABATIC EXPANSION RATE Cad

⑥ MEASURE SPEED SIGNAL U

⑦ U > 0.7 Cad

⑧ INCREASE LOAD ON GENERATOR 7

⑨ U = 0.7 Cad

⑩ MAINTAIN FOR TIME Δt

$$C_I = 91.5\left[\left(\frac{K}{K-1}R\right)(Tz - TI)(1 - \xi_I)\cdot(1 - \rho)(1 - \xi)\right]^{\frac{1}{2}} \quad \text{--- (2)}$$

$$Tz^* = Tz + \frac{A}{Cp}\frac{C_I^2}{2g} \quad \text{----- (3)}$$

$$Cad = 91.5\left[CpTz^*\left(1 - \left(\frac{T_2}{Tz}\right)^{\frac{n_2}{n_2-1}\frac{K-1}{K}}\right)\cdot(1 - \rho)\right]^{\frac{1}{2}} \quad \text{---- (4)}$$

11